# EUROPÄISCHE PATENTSCHRIFT

(11) **EP 1 052 862 B1**
(45) Veröffentlichungstag und Bekanntmachung des Hinweises auf die Patenterteilung: **17.03.2010**
(21) Anmeldenummer: 00109143.8
(22) Anmeldetag: 05.05.2000
(51) Int. Cl.: H04W 12/10, H04L 29/06, H04W 88/02

(54) **Verfahren und elektronisches Gerät zur Verschlüsselung einer Identifikationsinformation**
Method and electronic device for encrypting an identification number
Procédé et appareil électronique de cryptage de numéros d'identification

(30) Priorität: 11.05.1999 DE 19921531
(43) Veröffentlichungstag der Anmeldung: 15.11.2000
(73) Patentinhaber: SIEMENS AKTIENGESELLSCHAFT, 80333 München (DE)
(72) Erfinder: Adi, Wael, 38108 Braunschweig (DE)

(56) Entgegenhaltungen:
- WO-A-97/15161
- DE-A- 19 523 654
- US-A- 5 249 230
- US-A- 5 661 806

## Beschreibung

### Stand der Technik

Die Erfindung geht von einem Verfahren zur Verschlüsselung einer Identifikationsinformation und von einem elektronischen Gerät nach der Gattung der unabhängigen Ansprüche aus.

Aus der Veröffentlichung "GSM System Engineering", Asha Mehrotra, Artech Haus Pub. 1996 ist ein Verfahren zur Verschlüsselung der Identifikationsinformation eines elektronischen Gerätes bekannt, bei dem die Identifikationsinformation im elektronischen Gerät gespeichert ist und bei Empfang einer zufälligen Abfrageinformation nichtlinear auf eine Antwortinformation abgebildet wird. Dabei erfolgt die Identifikation des elektronischen Gerätes durch die sogenannte Challenge und Response Technik, die in Kryptosystemen verwendet wird, um die Identität eines elektronischen Gerätes festzustellen. Die Technik baut auf Frage und Antwort auf. Eine prüfende Station sendet an das zu prüfende elektronische Gerät eine Zufallssymbolfolge aus 128 Bits und fordert von dem Gerät eine bestimmte Antwortfolge aus 32 Bits, die nachweist, daß das Gerät eine bestimmte Identifikationsinformation, die ebenfalls 128 Bit umfaßt, besitzt. Die Antwortfolge wird dabei mittels einer stark nichtlinearen Abbildung aus der von der prüfenden Station gesendeten Zufallssymbolfolge und der Identifikationsinformation gebildet, wobei die stark nichtlineare Abbildung sehr schwer umkehrbar ist. Auf diese Weise soll verhindert werden, daß aus der Antwortfolge die Identifikationsinformation des Gerätes von Dritten ermittelt werden kann. Die prüfende Station, die die dem Gerät zugeordnete Identifikationsinformation kennt, führt dieselbe stark nichtlineare Abbildung der Zufallssymbolfolge und der Identifikationsinformation auf eine Antwortfolge durch und vergleicht die selbsterzeugte Antwortfolge mit der von dem Gerät erzeugten Antwortfolge, um bei Übereinstimmung der beiden Antwortfolgen die Identität des Gerätes festzustellen.

Dieses Verfahren wird bereits in Mobilfunksystemen gemäß dem GSM-Standard (Global System for Mobile Communications) eingesetzt, um einen Benutzer über seine Zugangsberechtigungskarte zu identifizieren, auf der dann die Identifikationsinformation gespeichert ist und die stark nichtlineare Abbildung durchgeführt wird. Derzeit wird jedoch eine Identitätsinformation IMEI (International Mobil Equipment Identity) des Mobilfunkgerätes in einem modifizierbaren Bereich des Mobilfunkgerätes gespeichert und offen übertragen, d.h. nicht durch einen Krypto-Identifikations-Mechanismus wie beispielsweise eine stark nichtlineare Abbildung einer Identifikationsinformation geschützt.

Um jedoch den Nachbau oder Diebstahl von Mobilfunkgeräten selbst zu verhindern, besteht die Notwendigkeit, einen Mechanismus im Mobilfunkgerät selbst zu integrieren, durch den eine Identifizierung des Mobilfunkgerätes selbst ermöglicht wird, um gestohlene, nachgebaute oder nicht zertifizierte Mobilfunkgeräte in einem Mobilfunknetz zu erkennen. Dies erfordert jedoch die Speicherung der Identifikationsinformation und die Durchführung der stark nichtlinearen Abbildung als Krypto-Abildung in einem nicht zugänglichen Bereich im Mobilfunkgerät selbst.

Dennoch besteht bei dem aus der genannten Veröffentlichung von Mehrotra bekannten Verfahren immer noch die Gefahr, daß bei geschickter Auswahl der Zufallssymbolfolge anhand der Antwortfolge Rückschlüsse auf die Identifikationsinformation möglich sind. Es ist daher erforderlich, den Krypto-Identifikationsmechanismus in einem besonders geschützten Bereich des Gerätes anzuordnen und so insbesondere die Identifikationsinformation vor ungewollter Entschlüsselung zu bewahren.

Aus der US-A- 5 661 806 ist ein Verfahren zur Kombinierten Authentisierung eines Telekommunikationsendgerätes bekannt, bei dem die Authentisierung basierend auf einem Authentisierungsschlüssel, der sowohl seitens des Endgerätes als auch seitens des Netzwerkes berechnet wird, durchgeführt wird.

### Vorteile der Erfindung

Das erfindungsgemäße Verfahren und das erfindungsgemäße Gerät mit den Merkmalen der unabhängigen Ansprüche haben demgegenüber den Vorteil, daß der Inhalt einer Speichereinheit durch eine erste nichtlineare Abbildung in die erste Antwortinformation umgewandelt wird, wobei die Speichereinheit initial mit einem, vorzugsweise zufälligen, Informationsmuster belegt ist, daß aus der Identifikationsinformation in Abhängigkeit der Abfrageinformation und der gebildeten ersten Antwortinformation eine erste verschlüsselte Information erzeugt wird und daß die Speichereinheit in einem Betriebsmodus zur Identifikation des Gerätes sukzessive in Abhängigkeit der erzeugten ersten verschlüsselten Information belegt wird. Auf diese Weise wird die Identifikationsinformation und die Abfrageinformation nicht direkt der nichtlinearen Abbildung zugeführt, sondern zunächst mit der rückgekoppelten Antwortinformation verknüpft, die zusätzlich durch das initial in der Speichereinheit gespeicherte Informationsmuster beeinflußt ist. Somit kann verhindert werden, daß bei günstig gewählter Abfrageinformation seitens einer prüfenden Station die prüfende Station aus der vom elektronischen Gerät gelieferten Antwortinformation Rückschlüsse auf die Identifikationsinformation treffen kann. Somit wird also ein besonders geschützter Bereich für die Anordnung des Krypto-Identifikations-Mechanismus im elektronischen Gerät geschaffen. Insbesondere wird dadurch die Identifikationsinformation besonders wirksam vor ungewolltem Zugriff bzw. ungewollter Entschlüsselung bewahrt.

Durch die in den Unteransprüchen aufgeführten Maßnahmen sind vorteilhafte Weiterbildungen und Verbesserungen des Verfahrens bzw. des elektronischen Gerätes gemäß den unabhängigen Ansprüchen möglich.

Besonders vorteilhaft ist es, daß die erste verschlüsselte Information durch nichtlineare Verknüpfung der Identifikationsinformation mit der Abfrageinformation und der ersten Antwortinformation gebildet wird. Die nichtlineare Verknüpfung kann dabei so gewählt werden, daß sie sehr schwer umkehrbar ist, so daß die Identifikationsinformation noch besser vor ungewolltem Zugriff oder ungewollter Entschlüsselung bewahrt wird.

Ein weiterer besonderer Vorteil ergibt sich daraus, daß der Inhalt der Speichereinheit durch eine zweite nichtlineare Abbildung auf eine zweite Antwortinformation abgebildet wird und daß die zweite Antwortinformation mit der ersten verschlüsselten Information verknüpft wird, um eine zweite verschlüsselte Information zu bilden, durch die die Speichereinheit sukzessive belegt wird. Durch die Rückkoppelung der nichtlinear gebildeten zweiten Antwortinformation in den Signalweg zwischen der Identifikationsinformation und der Speichereinheit wird der Schutz der Identifikationsinformation vor ungewolltem Zugriff bzw. vor ungewollter Entschlüsselung noch weiter verstärkt. Dies um so mehr, da die zweite Antwortinformation im Gegensatz zur ersten Antwortinformation nicht zur prüfenden Station übertragen wird und daher vor Mißbrauch geschützt ist.

Der Schutz der Identifikationsinformation vor ungewolltem Zugriff oder ungewollter Entschlüsselung kann noch dadurch weiter vergrößert werden, daß die zweite Antwortinformation nichtlinear mit der ersten verschlüsselten Information verknüpft wird, um die zweite verschlüsselte Information zu bilden.

Ein weiterer Vorteil besteht darin, daß der der Erzeugung des an die prüfende Station abzugebenden Teils der ersten Antwortinformation zugrundeliegende Inhalt der Speichereinheit vollständig in Abhängigkeit der ersten verschlüsselten Information gebildet wird. Auf diese Weise wird verhindert, daß die prüfende Station bei Kenntnis des Informationsmusters, mit dem die Speichereinheit initial gefüllt ist, und bei geschickter Auswahl der Abfrageinformation Rückschlüsse auf die Identifikationsinformation ziehen kann. Wenn der der Erzeugung des an die prüfende Station abzugebenden Teils der ersten Antwortinformation zugrundeliegende Inhalt der Speichereinheit vollständig in Abhängigkeit der ersten verschlüsselten Information gebildet wird, so ist das initial in der Speichereinheit abgelegte Informationsmuster vollständig überschrieben. Der prüfenden Station ist dann der Inhalt der Speichereinheit vor allem wegen der nur sehr schwer umkehrbaren ersten nichtlinearen Abbildung unbekannt und ein Zugriff auf die Identifikationsinformation oder eine Entschlüsselung der Identifikationsinformation nahezu ausgeschlossen.

Ein weiterer Vorteil besteht darin, daß die Speichereinheit sukzessive entweder in Abhängigkeit der erzeugten ersten verschlüsselten Information zur Identifizierung des elektronischen Gerätes oder in Abhängigkeit einer Systemschlüsselinformation zur Verschlüsselung einer Datenfolge belegt wird, wobei bei Belegung der Speichereinheit in Abhängigkeit der Systemschlüsselinformation die Datenfolge mit Hilfe der gebildeten ersten Antwortinformation, insbesondere durch Verknüpfung, verschlüsselt wird. Dazu kann die Speichereinheit Bestandteil eines Schlüsselgenerators sein, der auch die erste nichtlineare Abbildung durchführt. Je nachdem, ob die Speichereinheit in Abhängigkeit der ersten verschlüsselten Information oder in Abhängigkeit der Systemschlüsselinformation gefüllt wird, dient die erzeugte erste Antwortinformation entweder zur Verschlüsselung der Identifikationsinformation des Gerätes oder zur Verschlüsselung der Datenfolge, die bei Ausbildung des elektronischen Gerätes als Mobilfunkgerät die vom Mobilfunkgerät auszusende Nutzdatenfolge sein kann, wobei für beide Anwendungsfälle ein gemeinsamer Schlüsselgenerator eingesetzt werden kann. Somit werden Baugruppen eingespart und der Herstellungsaufwand, der Preis und das Gewicht des elektronischen Gerätes verringert.

Ein nochmals verbesserter Schutz der Identifikationsinformation vor ungewolltem Zugriff oder ungewollter Entschlüsselung ergibt sich, wenn die Identifikationsinformation in einem Register des Gerätes gespeichert ist, das nur Schreibzugriff oder weder Lesenoch Schreibzugriff ermöglicht.

### Zeichnung

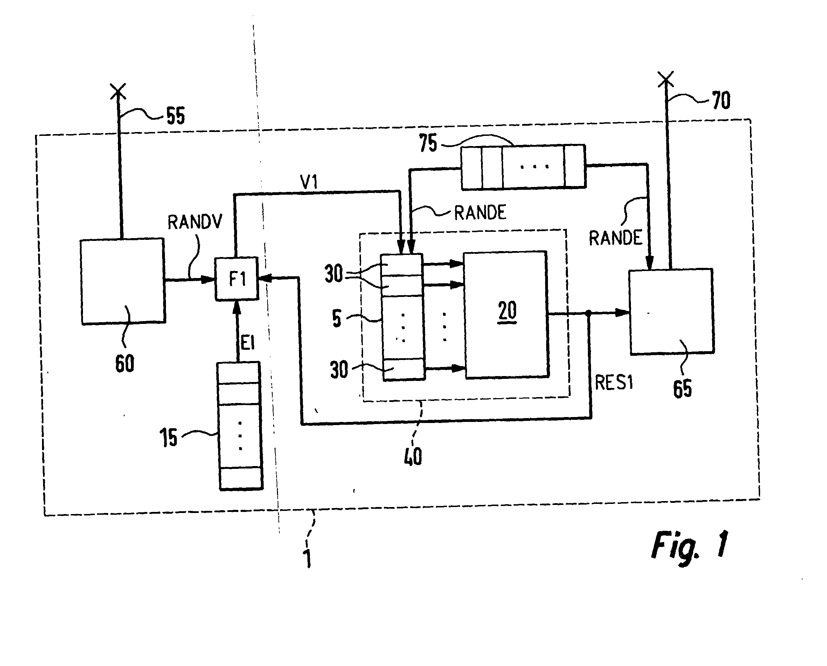

Ausführungsbeispiele der Erfindung sind in der Zeichnung dargestellt und in der nachfolgenden Beschreibung näher erläutert.
Es zeigen Figur 1 ein Bockschaltbild einer ersten Ausführungsform der Erfindung
Figur 2 ein Blockschaltbild einer zweiten Ausführungsform der Erfindung,
Figur 3 ein Blockschaltbild einer dritten Ausführungsform der Erfindung,
Figur 4 ein Blockschaltbild einer vierten Ausführungsform der Erfindung,
Figur 5 ein Blockschaltbild für ein nichtlineares Funktionsglied und
Figur 6 eine schematische Darstellung des Ablaufs der Identifikation eines elektronischen Gerätes.

### Beschreibung der Ausführungsbeispiele

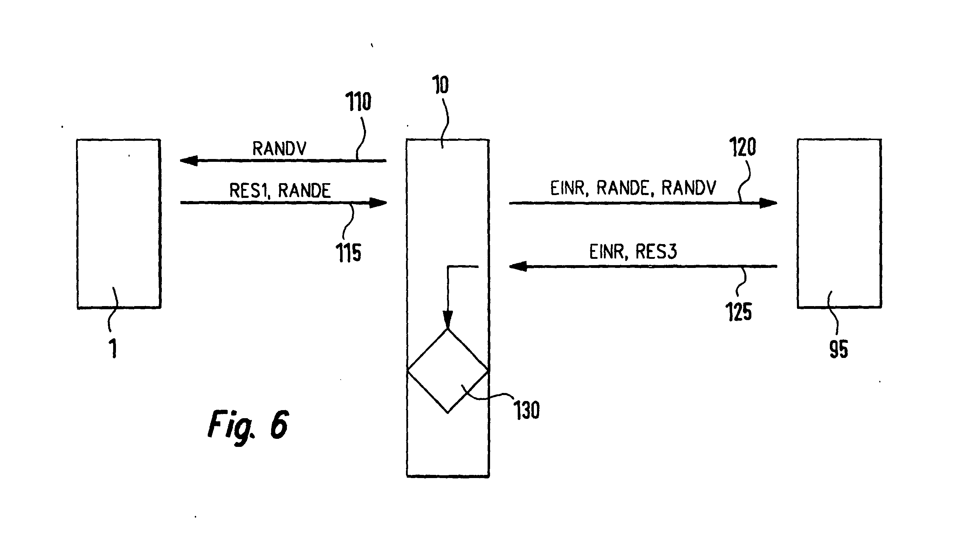

In Figur 1 kennzeichnet 1 ein als Mobilfunkgerät ausgebildetes elektronisches Gerät. Bei dem Gerät 1 kann es sich jedoch auch um ein beliebiges anderes elektronisches Gerät handeln. Das Mobilfunkgerät 1 umfaßt eine Empfangsantenne 55, die an eine Empfangseinheit 60 angeschlossen ist. Die Empfangseinheit 60 empfängt über ihre Empfangsantenne 55 gemäß Figur 6 von einer prüfenden Station 10 eine Abfrageinformation RANDV, die durch eine dritte Bitfolge gebildet sein kann, die beispielsweise ein Länge von n Bits aufweist. Die Abfrageinformation RANDV wird einem ersten Funktionsglied F1 zugeführt, dem auch eine in einem Register 15 gespeicherte Identifikationsinformation EI des Mobilfunkgerätes 1 zugeführt ist. Die Identifikationsinformation EI kann dabei als eine erste Bitfolge mit einer Länge von ebenfalls n Bit ausgebildet sein. Weiterhin kann vorgesehen sein, daß auf das Register 15 nur Schreibzugriff oder weder Schreib- noch Lesezugriff möglich ist, so daß das Register 15 zumindest vor ungewolltem Lesen geschützt wird. Somit ist das Register 15 und damit die Identifikationsinformation EI zumindest vor direktem Auslesen geschützt. Das erste Funktionsglied F1 liefert als Ausgangssignal eine erste verschlüsselte Information V1, die eine Speichereinheit 5 mit Speicherstellen 30 zugeführt ist. Die Anzahl der Speicherstellen 30 kann dabei ebenfalls n betragen. Die Speichereinheit 5 ist Teil eines Schlüsselgenerators 40, wie er beispielsweise aus der Veröffentlichung "Handbook of Applied Cryptography", A.J.Menezes, P. Oorschot, S.A. Vanstone, CRC Press, Inc. 1997, bekannt ist. Der Schlüsselgenerator 40 umfaßt weiterhin erste nichtlineare Abbildungsmittel 20. Jede Speicherstelle 30 der Speichereinheit 5 ist mit die ersten nichtlinearen Abbildungsmitteln 20 verbunden, so daß eine blockweise Verarbeitung des gesamten Inhalts der Speichereinheit 5 durch die ersten nichtlinearen Abbildungsmittel 20 ermöglicht wird. Am Ausgang der ersten nichtlinearen Abbildungsmitteln 20 wird eine erste Antwortinformation RES1 zur Verfügung gestellt, die einer Sendeeinheit 65 zugeführt wird. An die Sendeeinheit 65 ist eine Sendeantenne 70 angeschlossen. Es kann auch vorgesehen sein, eine gemeinsame Sende-/Emfpangseinheit anstelle der Empfangseinheit 60 und der Sendeeinheit 65 vorzusehen, genauso wie eine gemeinsame Sende-/Emfpangsantenne anstelle der Empfangsantenne 55 und der Sendeantenne 70 vorgesehen sein kann. Die Antwortinformation RES1 ist außerdem dem ersten Funktionsglied F1 zugeführt. Das Mobilfunkgerät 1 umfaßt weiterhin einen Speicherbereich 75, in dem ein Informationsmuster RANDE abgespeichert ist, das im Mobilfunkgerät 1 auf in Figur 1 nicht dargestellte Weise als Zufallsfolge oder mit fest definierten, nicht zufälligen Werten vorgegeben sein kann. Das Informationsmuster RANDE kann dabei als eine zweite Bitfolge ausgebildet sein, die ebenfalls eine Länge von n Bit aufweist. Der Speicherbereich 75 ist sowohl mit der Speichereinheit 5 als auch mit der Sendeeinheit 65 verbunden. Die Speichereinheit 5 ist initial vollständig mit dem Informationsmuster RANDE belegt.

Die Abfrageinformation RANDV kann ebenfalls als Zufallsinformation von der prüfenden Station 10 generiert werden. Sie kann jedoch auch fest definierte, nicht zufällige Werte umfassen. Bei Verwendung einer zufälligen Abfrageinformation RANDV wird jedoch die prüfende Station 10 besser vor ungewollten Abhörversuchen geschützt.

Generell wird durch die Rückkopplung der ersten Antwortinformation RES1 auf das erste Funktionsglied F1 und die Anordnung der Speichereinheit 5 zwischen den ersten nichtlinearen Abbildungsmitteln 20 und dem Register 15 mit der Identifikationsinformation EI, wobei die Speichereinheit 5 initial mit dem Informationsmuster RANDE belegt ist, die Identifikationsinformation EI besonders wirksam vor ungewollten Zugriff oder ungewollter Entschlüsselung geschützt. Zwischen der Abfrageinformation RANDV und der ersten Antwortinformation RES1 besteht somit nur ein indirekter Zusammenhang, so daß es nahezu ausgeschlossen ist, mittels einer günstig gewählten Abfrageinformation RANDV Rückschlüsse auf die Identifikationsinformation EI zu treffen. Die Wahl des Informationsmusters RANDE als Zufallsfolge dient als Schutz der im Mobilfunkgerät 1 erfolgenden Verschlüsselung der Identifikationsinformation EI vor Manipulation.

Zu Beginn eines Verschlüsselungsvorgangs wird die Speichereinheit 5 vollständig mit dem Informationsmuster RANDE aus dem Speicherbereich 75 belegt. Der Inhalt der Speichereinheit 5 wird dann in mehreren Verarbeitungsschritten oder in jedem Verarbeitungsschritt jeweils blockweise durch die ersten nichtlinearen Abbildungsmittel 20 so auf das erste Antwortsignal RES1 abgebildet, das bei jedem dieser Verarbeitungsschritte ein Bit der ersten Antwortinformation RES1 entsteht. Die erste Antwortinformation RES1 liefert eine Folge von Bits, die den Nachweis erbringen, daß das Register 15 die einzigartige, das Mobilfunkgerät 1 identifizierende Identifikationsinformation EI enthält. Weiterhin wird nach mehreren Verarbeitungsschritten oder nach jedem Verarbeitungsschritt jeweils eine der Speicherstellen 30 der Speichereinheit 5 durch ein Bit der ersten verschlüsselten Information V1 überschrieben, wobei die Speichereinheit 5 als First-In-First-Out-Speicher (FIFO) realisiert sein kann. Die erste verschlüsselte Information V1 wird dabei bitweise im Takt der Verarbeitungsschritte gebildet, wobei die Verarbeitungsschritte durch die empfangene Abfrageinformation RANDV getaktet sind, so daß sich eine sukzessive Belegung der Speichereinheit 5 in Abhängigkeit der ersten verschlüsselten Information V1 ergibt. Frühestens nach n Verarbeitungsschritten sind dann sämtliche Speicherstellen 30 der Speichereinheit 5 durch jeweils ein Bit der ersten verschlüsselten Information V1 überschrieben. Über die Sendeeinheit 65 wird zumindest ein Teil der ersten Antwortinformation RES1 sowie das Informationsmuster RANDE an die die Identität des Mobilfunkgerätes 1 prüfende Station 10 abgegeben bzw. abgestrahlt. Dabei kann es vorgesehen sein, das nur ein Teil der erzeugten ersten Antwortinformation RES1 an die prüfende Station 10 abgesandt wird, wobei dieser Teil so gewählt ist, daß der der Erzeugung dieses Teils zugrundeliegende Inhalt der Speichereinheit 5 vollständig in Abhängigkeit der ersten verschlüsselten Information V1 gebildet wird. Das bedeutet, daß frühestens dann, wenn das initial die Speichereinheit 5 belegende Informationsmuster RANDE vollständig in der Speichereinheit 5 in Abhängigkeit der ersten verschlüsselten Information V1 überschrieben ist, eine Abgabe der sich aus dem Inhalt der Speichereinheit 5 durch die erste nichtlineare Abbildung ergebenden Bits der ersten Antwortinformation RES1 an die prüfende Station 10 erfolgt. Dies ist frühestens nach n Verarbeitungsschritten möglich, denn wenn nach jedem Verarbeitungsschritt eine Speicherstelle 30 der Speichereinheit 5 nach FIFO-Prinzip durch ein Bit der ersten verschlüsselten Information V1 überschrieben wird, so ist nach n Verarbeitungsschritten das initial in der ersten Speichereinheit 5 gespeicherte Informationsmuster RANDE vollständig überschrieben. Der prüfenden Station 10 ist somit nicht bekannt, auf welcher Datenbasis der von ihr empfangene Teil der ersten Antwortinformation RES1 erstellt wurde. Die erste nichtlineare Abbildung, die durch die ersten nichtlinearen Abbildungsmittel 20 realisiert wird, ist dabei als sehr schwer umkehrbare Funktion ausgebildet, so daß Rückschlüsse auf die in der Speichereinheit 5 abgelegte Datenbasis nahezu ausgeschlossen sind.

Auf diese Weise wird die Identifikationsinformation EI noch besser vor Zugriff oder Entschlüsselung geschützt.

Das erste Funktionsglied F1 kann eine lineare Verknüpfung der Identifikationsinformation EI mit der Abtrageinformation RANDV und der ersten Antwortinformation RES1 durchführen, um die erste verschlüsselte Information V1 zu bilden. Die lineare Verknüpfung kann dabei als logische XOR-Verknüpfung ausgebildet sein.

Es kann jedoch auch vorgesehen sein, daß das erste Funktionsglied F1 eine nichtlineare Verknüpfung der Identifikationsinformation EI mit der Abtrageinformation RANDV und der ersten Antwortinformation RES1 durchführt, um die erste verschlüsselte Information V1 zu bilden. Bei Verwendung einer nichtlinearen Verknüpfung für das erste Funktionsglied F1 wird der Zugriff auf die Identifikationsinformation EI bzw. deren Entschlüsselung auf der Grundlage der an die prüfende Station 10 gesandten Antwortinformation RES1 weiter erschwert.

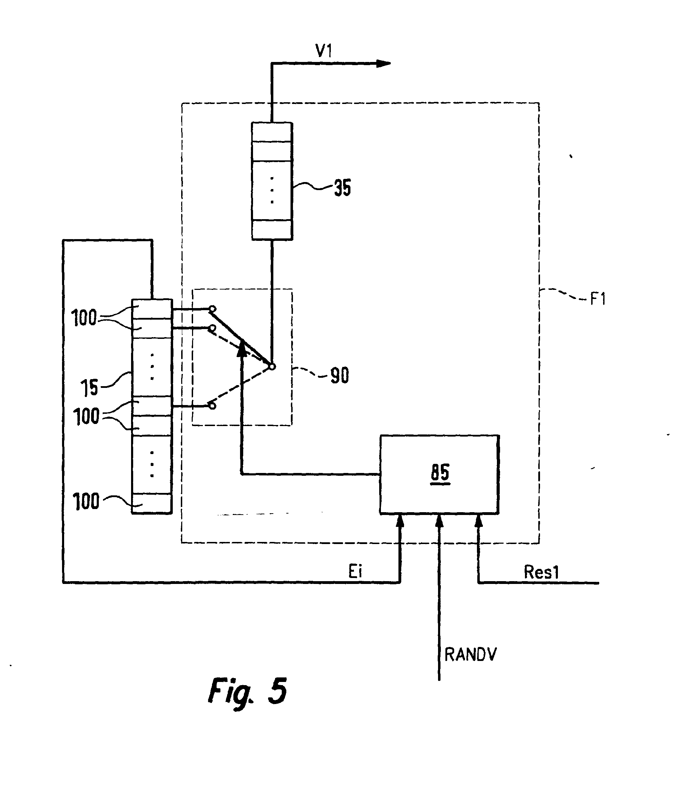

Figur 5 zeigt ein Beispiel einer Realisierung einer solchen nichtlinearen Verknüpfung durch das erste Funktionsglied F1. Das erste Funktionsglied F1 umfaßt dabei ein Speichermodul 35, in dem zumindest eine Teilmenge der Bitfolge der Identifikationsinformation EI gespeichert ist. Bei mehreren oder allen Verarbeitungsschritten nimmt das Speichermodul 35 in Abhängigkeit der Abfrageinformation RANDV, der ersten Antwortinformation RES1 und der Identifikationsinformation EI eine neue Teilmenge der Bitfolge der Identifikationsinformation EI auf und gibt ein Bit für die erste verschlüsselte Information V1 ab. Dabei kann das Speichermodul 35 als FIFO-Speicher ausgebildet sein, bei dem bei jedem Verarbeitungsschritt ein neues Bit aus dem Register 15 zugeführt ist. Zumindest ein Teil der Speicherstellen 100 des Registers 15 ist dabei über dritte steuerbare Schaltmittel 90 mit dem Speichermodul 35 verbindbar, wobei zu einem Zeitpunkt bzw. bei einem Verarbeitungsschritt jeweils nur eine der Speicherstellen 100 des Registers 15 über die dritten steuerbaren Schaltmittel 90 mit dem Speichermodul 35 verbunden sein kann. Die dritten steuerbaren Schaltmittel 90 werden dabei von einem nichtlinearen Verknüpfungsmodul 85 angesteuert, das eine nichtlineare Verknüpfung jeweils eines Bits der Identifikationsinformation EI, der Abfrageinformation RANDV und der ersten Antwortinformation RES1 durchführt, wobei in Abhängigkeit des Verknüpfungsergebnisses die dritten steuerbaren Schaltmittel 90 zur Verbindung eine der mit dem Speichermodul 35 verbindbaren Speicherstellen 100 des Registers 15 mit dem Speichermodul 35 angesteuert wird. Bei dem entsprechenden Verarbeitungsschritt wird dann der Inhalt der entsprechenden Speicherstelle 100 nach dem FIFO-Prinzip in das Speichermodul 35 eingeschrieben, wobei jede Speicherstelle 100 des Registers 15 ein Bit umfaßt, und dafür das am längsten im Speichermodul 35 befindliche Bit als erste verschlüsselte Information V1 abgegeben. Die dritten steuerbaren Schaltmittel 90 und das nichtlineare Verknüpfungsmodul 85 sind ebenfalls Bestandteile des ersten Funktionsgliedes F1 gemäß Figur 5.

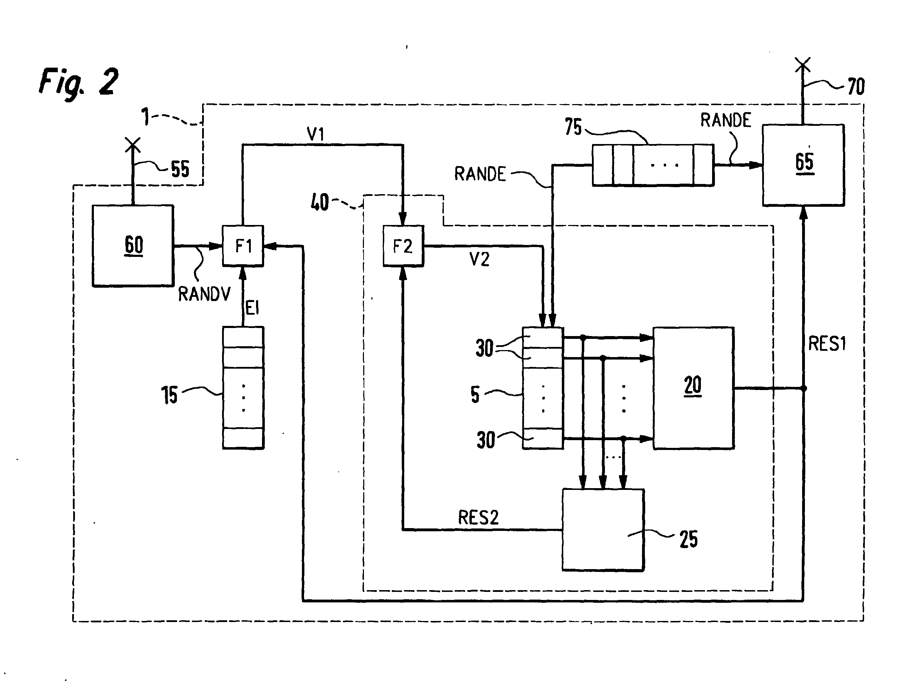

Figur 2 zeigt eine weitere Ausführungsform des erfindungsgemäßen Mobilfunkgerätes 1. Das Mobilfunkgerät 1 gemäß Figur 2 basiert auf dem in Figur 1 dargestellten Mobilfunkgerät 1, wobei gleiche Bezugszeichen gleiche Elemente kennzeichnen. Zusätzlich umfaßt das Mobilfunkgerät 1 gemäß Figur 2 zweite nichtlineare Abbildungsmittel 25, die eingangsseitig mit jeder Speicherstelle 30 der Speichereinheit 5 verbunden sind, so daß der gesamte Inhalt der Speichereinheit 5 blockweise durch die zweiten nichtlinearen Abbildungsmittel 25 auf eine zweite Antwortinformation RES2 abgebildet wird, wobei jede Speicherstelle 30 der Speichereinheit 5 wie beschrieben ein Bit enthält. Die zweite Antwortinformation RES2 ist dann auf ein zwischen dem ersten Funktionsglied F1 und der Speichereinheit 5 angeordnetes zweites Funktionsglied F2 geführt, dem außerdem die erste verschlüsselte Information V1 zugeführt ist. Als Ausgangsgröße gibt das zweite Funktionsglied F2 eine zweite verschlüsselte Information V2 an die Speichereinheit 5 ab.

Somit ist das erste Funktionsglied F1 nicht mehr direkt mit der Speichereinheit 5 verbunden. Durch das zweite Funktionsglied F2 wird die zweite Antwortinformation RES2 mit der ersten verschlüsselten Information V1 verknüpft, um die zweite verschlüsselte Information V2 zu bilden, durch die nun die Speichereinheit 5 im Takt der Verarbeitungsschritte sukzessive belegt wird. Der Inhalt der Speichereinheit 5 wird nun also zusätzlich in mehreren oder allen Verarbeitungsschritten jeweils blockweise durch die zweiten nichtlinearen Abbildungsmittel 25 so auf die zweite Antwortinformation RES2 abgebildet, daß bei jedem dieser Verarbeitungsschritte ein Bit der zweiten Antwortinformation RES2 entsteht, und daß das zweite Funktionsglied F2 die zweite verschlüsselte Information V2 bitweise im Takt der Verarbeitungsschritte bildet.

Durch die mittels der zweiten nichtlinearen Abbildungsmittel 25 bewirkte zweite nichtlineare Abbildung, die vorteilhafter Weise ebenfalls so gewählt wird, daß sie nur sehr schwer umkehrbar ist, und die Rückkopplung der entstehenden zweiten Antwortinformation RES2 in den Signalweg zwischen die Speichereinheit 5 und das Register 15 mit der Identifikationsinformation EI wird die Identifikationsinformation EI im Register 15 noch stärker vor Zugriff oder Entschlüsselung auf der Basis der an die prüfende Station 10 übertragenen ersten Antwortinformation RES1 geschützt, nicht zuletzt deshalb, weil die zweite Antwortinformation RES2 nicht an die prüfende Station 10 übertragen wird und somit unbekannt bleibt.

Für das zweite Funktionsglied F2 kann wiederum eine lineare Verknüpfungsfunktion, beispielsweise eine logische XOR-Verknüpfung gewählt werden, so daß die zweite Antwortinformation RES2 linear mit der ersten verschlüsselten Information V1 verknüpft wird, um die zweite verschlüsselte Information V2 zu bilden.

Es kann jedoch auch vorgesehen sein, daß das zweite Funktionsglied F2 eine nichtlineare Verknüpfung der zweiten Antwortinformation RES2 mit der ersten verschlüsselten Information V1 durchführt, um die zweite verschlüsselte Information V2 zu bilden, wodurch der Schutz der Identifikationsinformation EI vor ungewolltem Zugriff oder ungewollter Entschlüsselung weiter erhöht wird. In einer weiteren Ausführungsform kann es vorgesehen sein, daß die Speichereinheit 5 sukzessive entweder in Abhängigkeit der erzeugten ersten verschlüsselten Information V1 gemäß den beiden beschriebenen Ausführungsbeispielen nach Figur 1 oder Figur 2 zur Identifizierung des Mobilfunkgerätes 1 oder in Abhängigkeit einer Systemschlüsselinformation SSI zur Verschlüsselung einer Datenfolge D belegt wird, wobei bei Belegung der Speichereinheit 5 in Abhängigkeit der Systemschlüsselinformation SSI die Datenfolge D mit Hilfe der gebildeten ersten Antwortinformation RES1 verschlüsselt wird. Auf diese Weise kann der Schlüsselgenerator 40 sowohl zur Verschlüsselung der Identifikationsinformation EI als auch zur Verschlüsselung einer vom Mobilfunkgerät 1 abzusendenden, Nutzdaten beinhaltenden Datenfolge D verwendet werden. Die Funktionalität des Schlüsselgenerators 40 wird somit erhöht und Bauteile können eingespart werden.

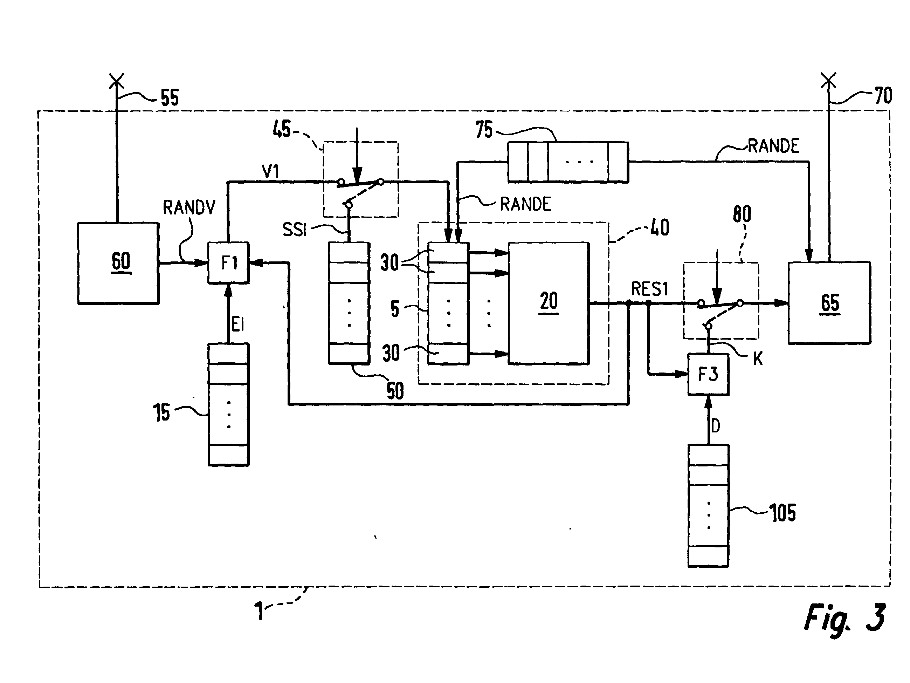

Figur 3 zeigt diesbezüglich eine Weiterbildung der Ausführungsform nach Figur 1, wobei gleiche Bezugszeichen gleiche Elemente kennzeichnen und die Ausführungsform nach Figur 3 im Vergleich zur Ausführungsform nach Figur 1 zusätzlich zwischen dem ersten Funktionsglied F1 und der Speichereinheit 5 erste steuerbare Schaltmittel 45 für das Mobilfunkgerät 1 vorsieht, über die wahlweise die erste verschlüsselte Information V1 vom ersten Funktionsglied F1 zur Identifikation des Mobilfunkgerätes 1 oder die Systemschlüsselinformation SSI zur Verschlüsselung der Datenfolge D der Speichereinheit 5 zuführbar ist. Die Systemschlüsselinformation SSI ist dabei in einem Systemschlüsselspeicher 50 abgelegt. Das Mobilfunkgerät 1 kann dabei zwei Betriebsmodi umfassen, wobei ein erster Betriebsmodus zur Identifizierung des Mobilfunkgerätes 1 und ein zweiter Betriebsmodus zum Senden und Empfangen von Datenfolgen D vorgesehen sein kann. Je nach gewünschtem Betriebsmodus werden dabei die ersten steuerbaren Schaltmittel 45 durch eine in Figur 3 nicht dargestellte Steuerung entsprechend angesteuert, um entweder das erste Funktionsglied F1 oder den Systemschlüsselspeicher 50 mit der Speichereinheit 5 zu verbinden. Weiterhin sind gemäß Figur 3 zweite steuerbare Schaltmittel 80 vorgesehen, über die wahlweise entweder die erste Antwortinformation RES1 oder ein Kryptogramm K der Sendeeinheit 65 zur Abstrahlung über die Sendeantenne 70 zuführbar ist. Das Kryptogramm K wird dabei durch Verknüpfung der ersten Antwortinformation RES1 mit der Datenfolge D mittels eines dritten Verknüpfungsgliedes F3 gebildet. Die Datenfolge D wird dem dritten Funktionsglied F3 beispielsweise über einen Datenspeicher 105 zugeführt, der von einem Benutzer über ein Mikrofon eingegebene Sprachdaten in digitalisierter Form oder auch durch eine Kamera aufgenommene digitalisierte Videodaten enthalten kann. Das dritte Funktionsglied F3 kann dabei eine lineare Verknüpfung, beispielsweise eine logische XOR-Verknüpfung zwischen der ersten Antwortinformation RES1 und der Datenfolge D durchführen, um das Kryptogramm K zu bilden.

Dabei können die zweiten steuerbaren Schaltmittel 80 synchron zu den ersten steuerbaren Schaltmitteln 45 angesteuert werden, so daß in dem Betriebsmodus zur Identifikation des Mobilfunkgerätes 1 die erste Antwortinformation RES1 über die zweiten steuerbaren Schaltmittel 80 der Sendeeinheit 65 und im Betriebsmodus zur Verschlüsselung der Datenfolge D entsprechend das Kryptogramm K der Sendeeinheit 65 zugeführt ist. Somit erfolgt im Betriebsmodus zur Identifikation des Mobilfunkgerätes 1 eine Verschlüsselung der Identifikationsinformation EI mittels des Schlüsselgenerators 40 und deren Absendung an die prüfende Station 10 mittels der ersten Antwortinformation RES1, wie dies gemäß dem Ausführungsbeispiel gemäß Figur 1 beschrieben ist. Im Betriebsmodus zur Verschlüsselung der Datenfolge D wird die Systemschlüsselinformation SSI mittels des Schlüsselgenerators 40 verschlüsselt und die entsprechend gebildete erste Antwortinformation RES1 nicht direkt der Sendeinheit 65 zugeführt, sondern mit der Datenfolge D verknüpft, um das Kryptogramm K zu bilden, das dann der Sendeeinheit 65 zur Abstrahlung über die Sendeantenne 70 an einen weiteren Teilnehmer eines Mobilfunknetzes abgegeben wird. Das in Abhängigkeit der ersten Antwortinformation RES1 und der Datenfolge D gebildete Kryptogramm K stellt eine verschlüsselte Datenfolge dar.

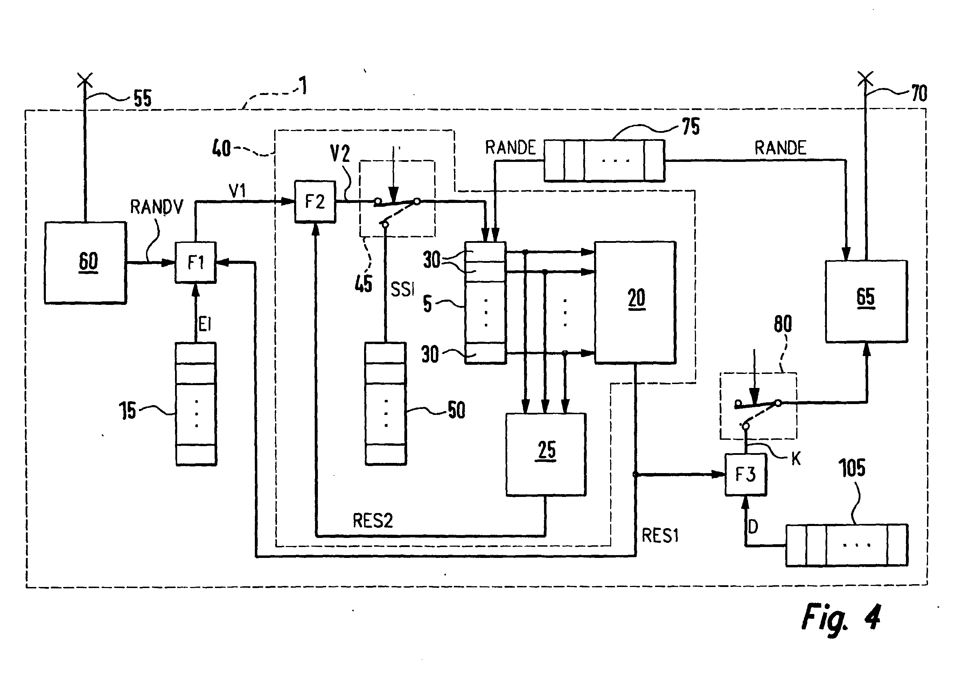

Figur 4 zeigt eine Weiterbildung der Ausführungsform nach Figur 2, wobei gleiche Bezugszeichen wiederum gleiche Elemente kennzeichnen. Zusätzlich sind bei dem Ausführungsbeispiel nach Figur 4 im Vergleich zu dem Ausführungsbeispiel nach Figur 2 zwischen dem zweiten Funktionsglied F2 und der Speichereinheit 5 die ersten steuerbaren Schaltmittel 45 angeordnet, über die wahlweise die zweite verschlüsselte Information V2 oder die im Systemschlüsselspeicher 50 abgelegte Systemschlüsselinformation SSI der Speichereinheit 5 zuführbar ist. Die ersten steuerbaren Schaltmittel 45 sind dabei vor der Speichereinheit 5 angeordnet. Es kann jedoch auch vorgesehen sein, die ersten steuerbaren Schaltmittel 45 zwischen dem ersten Funktionsglied F1 und dem zweiten Funktionsglied F2 anzuordnen, um wahlweise die erste verschlüsselte Information V1 oder die Systemschlüsselinformation SSI dem zweiten Funktionsglied F2 zuzuführen. Entsprechend dem Ausführungsbeispiel nach Figur 3 sind auch die zweiten steuerbaren Schaltmittel 80 in Figur 4 vorgesehen, über die wahlweise die erste Antwortinformation RES1 oder das in gleicher Weise wie in Figur 3 gebildete Kryptogramm K der Sendeeinheit 65 zuführbar ist. Gemäß dem Ausführungsbeispiel nach Figur 4 kann somit auch das Ausführungsbeispiel nach Figur 2 dahingehend weitergebildet werden, daß mit dem Schlüsselgenerator 40 sowohl die Identitikationsinformation EI für einen Betriebsmodus zur Identifikation des Mobilfunkgerätes 1 als auch die Systemschlüsselinformation SSI für den Betriebsmodus zur Verschlüsselung einer Datenfolge D durch den Schlüsselgenerator 40 verschlüsselt werden kann. Die ersten steuerbaren Schaltmittel 45 und die zweiten steuerbaren Schaltmittel 80 können dabei wie beim Ausführungsbeispiel nach Figur 3 entsprechend synchronisiert sein.

Gemäß den Ausführungsbeispielen nach Figur 2 und Figur 4 sind die zweiten nichtlinearen Abbildungsmittel 25 und das zweite Funktionsglied F2 Bestandteile des Schlüsselgenerators 40. Gemäß Figur 4 sind auch die ersten steuerbaren Schaltmittel 45 und der Systemschlüsselspeicher 50 Bestandteile des Schlüsselgenerators 40. Die genannten Elemente können jedoch auch außerhalb des Schlüsselgenerators 40 angeordnet sein.

Figur 6 zeigt schematisch den Ablauf eines Identifikationsvorgangs für das Mobilfunkgerät 1. Dabei sendet bei einem Programmpunkt 110 die prüfende Station 10 die Abfrageinformation RANDV an das Mobilfunkgerät 1. Das Mobilfunkgerät 1 empfängt die Abtrageinformation RANDV und erzeugt im Betriebsmodus zur Identifikation des Mobilfunkgerätes 1 die erste Antwortinformation RES1. Bei einem Programmpunkt 115 wird die erste Antwortinformation RES1 sowie das ebenfalls vom Mobilfunkgerät 1 generierte Informationsmuster RANDE an die prüfende Station 10 gesendet. Bei einem Programmpunkt 120 sendet die prüfende Station 10 eine nicht verschlüsselte offene Identitätsnummer EINR des zu prüfenden Mobilfunkgerätes 1 an eine Zentrale 95 zusammen mit dem Informationsmuster RANDE und der Abfrageinformation RANDV. In der Zentrale 95 ist die Identifikationsinformation EI des Mobilfunkgerätes 1 ebenfalls gespeichert und in gleicher Weise wie bei den beschriebenen Ausführungsbeispielen wird aus der Abfrageinformation RANDV, dem Informationsmuster RANDE und der Identifikationsinformation EI in der Zentrale 95 eine Berechnung einer dritten Antwortinformation RES3 durchgeführt, die bei einem Programmpunkt 125 zusammen mit der offenen Identitätsnummer EINR an die prüfende Station 10 zurückgesandt wird. Anhand der Identitätsnummer EINR erkennt die prüfende Station 10, daß es sich bei der empfangenen dritten Antwortinformation RES3 um die von der Zentrale 95 abgesandte Antwortinformation für das Mobilfunkgerät 1 handelt. Daraufhin führt die prüfende Station 10 bei einem Programmpunkt 130 einen Vergleich der ersten Antwortinformation RES1 und der dritten Antwortinformation RES3 durch. Stimmen die beiden Antwortinformationen überein, so erkennt die prüfende Station 10, daß das geprüfte Mobilfunkgerät 1 tatsächlich der offenen Identitätsnummer EINR zugeordnet ist. Andernfalls wird die Identität des Mobilfunkgerätes 1 nicht erkannt, da es vielleicht nachgebaut wurde, jedoch mit der falschen Identifikationsinformation EI versehen wurde.

Werden bei den beschriebenen Ausführungsbeispielen die Elemente und Signalpfade des elektronischen Gerätes 1, die besonders vor ungewolltem Zugriff oder ungewollter Entschlüsselung zu schützen sind, nicht zerstörungsfrei vom elektronischen Gerät 1 trennbar angeordnet und in einem gemeinsamen Chip oder Speicherchip integriert, so ist auch ein Hardwarezugriff erheblich erschwert. Dies gilt besonders für den Siganlpfad zwischen dem Register 15 und dem Schlüsselgenerator 40 sowie das Register 15 und den Schlüsselgenerator 40 selbst.

Die Erfindung ist nicht auf ein als Mobilfunkgerät ausgebildetes elektronisches Gerät 1 beschränkt, sondern kann für jedes elektronische Gerät angewendet werden, bei dem eine Überprüfung der Identität durchgeführt werden soll. Dies kann beispielsweise auch ein Schnurlos-Telefon, ein schnurgebundenes Telefon, ein Autoradio, ein Navigationsgerät, usw. sein. Die Überprüfung muß dabei nicht drahtlos wie bei den beschriebenen Ausführungsbeispielen erfolgen, die Empfangseinheit 60 und die Sendeeinheit 65 können auch drahtgebunden an die prüfende Station 10 angeschlossen sein.

## Patentansprüche

1. Verfahren zur Verschlüsselung einer Identifikationsinformation (EI) eines elektronischen Gerätes (1), wobei die Identifikationsinformation (EI) im elektronischen Gerät (1) gespeichert ist und bei Empfang einer Abfrageinformation (RANDV) nichtlinear auf eine erste Antwortinformation (RES1) abgebildet wird,
**dadurch gekennzeichnet,**
**dass** der Inhalt einer Speichereinheit (5) durch eine erste nichtlineare Abbildung in die erste Antwortinformation (RES1) umgewandelt wird, wobei die Speichereinheit (5) initial mit einem Informationsmuster (RANDE) belegt ist,
**dass** aus der Identifikationsinformation (EI) in Abhängigkeit der Abfrageinformation (RANDV) und der gebildeten ersten Antwortinformation (RES1) eine erste verschlüsselte Information (V1) erzeugt wird, und
**dass** die Speichereinheit (5) in einem Betriebsmodus zur Identifikation des Gerätes (1) sukzessive in Abhängigkeit der erzeugten ersten verschlüsselten Information (V1) belegt wird.

2. Verfahren nach Anspruch 1, **dadurch gekennzeichnet, dass** die erste verschlüsselte Information (V1) durch lineare oder nichtlineare Verknüpfung der Identifikationsinformation (EI) mit der Abfrageinformation (RANDV) und der ersten Antwortinformation (RES) gebildet wird.

3. Verfahren nach Anspruch 1 oder 2, **dadurch gekennzeichnet, dass** die Speichereinheit (5) direkt von der ersten verschlüsselten Information (V1) sukzessive belegt wird.

4. Verfahren nach Anspruch 1 oder 2, **dadurch gekennzeichnet, dass** der Inhalt der Speichereinheit (5) durch eine zweite nichtlineare Abbildung auf eine zweite Antwortinformation (RES2) abgebildet wird und dass die zweite Antwortinformation (RES2) mit der ersten verschlüsselten Information (V1) verknüpft wird, um eine zweite verschlüsselte Information (V2) zu bilden, durch die die Speichereinheit (5) sukzessive belegt wird.

5. Verfahren nach Anspruch 4, **dadurch gekennzeichnet, dass** die zweite Antwortinformation (RES2) linear oder nichtlinear mit der ersten verschlüsselten Information (V1) verknüpft wird, um die zweite verschlüsselte Information (V2) zu bilden.

6. Verfahren nach einem der vorherigen Ansprüche, **dadurch gekennzeichnet, dass** zumindest ein Teil der ersten Antwortinformation (RES1) und das Informationsmuster (RANDE) an eine die Identität des elektronischen Gerätes (1) prüfende Station (10) abgegeben werden.

7. Verfahren nach Anspruch 6, **dadurch gekennzeichnet, dass** der der Erzeugung des an die prüfende Station (10) abzugebenden Teils der ersten Antwortinformation (RES1) zugrundeliegende Inhalt der Speichereinheit (5) vollständig in Abhängigkeit der ersten verschlüsselten Information (V1) gebildet wird.

8. Verfahren nach einem der vorherigen Ansprüche, **dadurch gekennzeichnet, dass** die Speichereinheit (5) sukzessive entweder in Abhängigkeit der erzeugten ersten verschlüsselten Information (V1) zur Identifizierung des elektronischen Gerätes (1) oder in Abhängigkeit einer Systemschlüsselinformation (SSI) zur Verschlüsselung einer Datenfolge (D) belegt wird, wobei bei Belegung der Speichereinheit (5) in Abhängigkeit der Systemschlüsselinformation (SSI) die Datenfolge (D) mit Hilfe der gebildeten ersten Antwortinformation (RES1) verschlüsselt wird.

9. Verfahren nach einem der voherigen Ansprüche, **dadurch gekennzeichnet, dass** die Identifikationsinformation (EI) in Form einer ersten Bitfolge in einem Register (15) gespeichert ist, dass die Speichereinheit (5) initial vollständig durch eine das Informationsmuster (RANDE) bildende zweite Bitfolge gefüllt ist, dass die Abfrageinformation (RANDV) durch eine dritte Bitfolge gebildet ist, dass der Inhalt der Speichereinheit (5) in mehreren Verarbeitungsschritten jeweils blockweise durch erste nichtlineare Abbildungsmittel (20) so auf die erste Antwortinformation (RES1) abgebildet wird, dass bei jedem Verarbeitungsschritt ein Bit der ersten Antwortinformation (RES1) entsteht, dass nach mehreren Verarbeitungsschritten jeweils eine Überschreibung einer Speicherstelle (30) der Speichereinheit (5) durch ein Bit in Abhängigkeit der ersten verschlüsselten Information (V1) erfolgt, wobei die erste verschlüsselte Information (V1) bitweise im Takt der Verarbeitungsschritte gebildet wird und die Verarbeitungsschritte durch die empfangene Abfrageinformation (RANDV) getaktet sind, so dass sich im Betriebsmodus zur Identifikation des Gerätes (1) eine sukzessive Belegung der Speichereinheit (5) in Abhängigkeit der ersten verschlüsselten Information (V1) ergibt.

10. Elektronisches Gerät (1), mit einem Register (15) zur Speicherung einer Identifikationsinformation (EI) und ersten nichtlinearen Abbildungsmitteln (20) zur Erzeugung einer ersten Antwortinformation (RES1) in Abhängigkeit der Identifikationsinformation (EI) bei Empfang einer Abfrageinformation (RANDV), **dadurch gekennzeichnet,**
**dass** eine Speichereinheit (5) vorgesehen ist, deren Inhalt den ersten nichtlinearen Abbildungsmitteln (20) zu einer ersten nichtlinearen Abbildung auf die erste Antwortinformation (RES1) zugeführt ist, wobei die Speichereinheit (5) initial mit einem Informationsmuster (RANDE) belegt ist,
**dass** ein erstes Funktionsglied (F1) vorgesehen ist, das aus der Identifikationsinformation (EI) in Abhängigkeit der Abfrageinformation (RANDV) und der gebildeten ersten Antwortinformation (RES1) eine erste verschlüsselte Information (V1) erzeugt, und
**dass** Mittel vorgesehen sind, die in Abhängigkeit der erzeugten ersten verschlüsselten Information (V1) eine sukzessive Belegung der Speichereinheit (5) in einem Betriebsmodus zur Identifikation des Gerätes (1) durchführen.

11. Gerät (1) nach Anspruch 10, **dadurch gekennzeichnet, dass** das erste Funktionsglied (F1) ausgestaltet ist zum Durchführen einer linearen oder nichtlinearen Verknüpfung der Identifikationsinformation (EI) mit der Abfrageinformation (RANDV) und der ersten Antwortinformation (RES1), um die erste verschlüsselte Information (V1) zu bilden.

12. Gerät (1) nach Anspruch 10 oder 11, **dadurch gekennzeichnet, dass** die Mittel ausgestaltet sind zum sukzessiven Belegen der Speichereinheit (5) direkt mit der ersten verschlüsselten Information (V1).

13. Gerät (1) nach Anspruch 10 oder 11, **dadurch gekennzeichnet,**
**dass** zweite nichtlineare Abbildungsmittel (25) vorgesehen sind, die den Inhalt der Speichereinheit (5) mittels einer zweiten nichtlinearen Abbildung auf eine zweite Antwortinformation (RES2) abbilden,
**dass** ein zweites Funktionsglied (F2) vorgesehen ist, das die zweite Antwortinformation (RES2) mit der ersten verschlüsselten Information (V1) verknüpft, um eine zweite verschlüsselte Information (V2) zu bilden, und
**dass** Mittel vorgesehen sind, die eine sukzessive Belegung der Speichereinheit (5) direkt mit der zweiten verschlüsselten Information (V2) durchführen.

14. Gerät (1) nach Anspruch 13, **dadurch gekennzeichnet, dass** das zweite Funktionsglied (F2) eine lineare oder nichtlineare Verknüpfung der zweiten Antwortinformation (RES2) mit der ersten verschlüsselten Information (V1) durchführt, um die zweite verschlüsselte Information (V2) zu bilden.

15. Gerät (1) nach einem der Ansprüche 10 bis 14, **dadurch gekennzeichnet, dass** Mittel vorgesehen sind, die eine Abgabe des Informationsmusters (RANDE) und zumindest eines Teils der ersten Antwortinformation (RES1) an eine die Identität des elektronischen Gerätes (1) prüfende Station (10) durchführen.

16. Gerät nach einem der Ansprüche 10 bis 15, das als ein Mobilfunkgerät ausgestaltet ist.

## Claims

1. Method for encryption of an identification number (EI) of an electronic device (1), with the identification number (EI) being stored in the electronic device (1) and on receipt of request information (RANDV) being mapped in a non-linear manner to first response information (RES1),
**characterised in that**
the content of a memory unit (5) is converted by a first non-linear mapping into the first response information (RES1), with the memory unit (5) initially being occupied by an information pattern (RANDE),
first encrypted information (V1) is created from the identification number (EI) as a function of the request information (RANDV) and the first response information (RES1) formed.
the memory unit (5), in an operating mode for identification of the device (1), is occupied successively as a function of the first encrypted information (V1).

2. Method according to claim 1, **characterised in that** the first encrypted information (V1) is formed by linear or non-linear logical linkage of the identification number (EI) to the request information (RANDV) and the first response information (RES).

3. Method according to claim 1 or 2, **characterised in that** the memory unit (5) is successively occupied directly by the first encrypted information (V1)

4. Method according to claim 1 or 2, **characterised in that** the contents of the memory unit (5) are mapped by a second non-linear mapping to the second response information (RES2) and that the second response information (RES2) is logically linked to the first encrypted information (V1) in order to form second encrypted information (V2) by which the memory unit (5) is successively occupied.

5. Method according to claim 4, **characterised in that** the second response information (RES2) is logically linked in a linear or non-linear manner with the first encrypted information (V1) in order to form the second encrypted information (V2).

6. Method according to one of the previous claims, **characterised in that** at least one part of the first response information (RES1) and the information pattern (RANDE) are output to a station (10) checking the identity of the electronic device (1).

7. Method according to claim 6, **characterised in that** the content of the memory unit (5) underlying the creation of the part of the first response information (RES1) to be issued to the testing station (10) is formed entirely as a function of the first encrypted information (V1).

8. Method according to one of the previous claims, **characterised in that** the memory unit (5) is successfully occupied either as a function of the created first encrypted information (V1) for identification of the electronic device (1) or as a function of the system encryption information (SSI) for encrypting a data sequence (D), with the data sequence (D) being encrypted during occupation of the memory unit (5) as a function of the system encryption information (SSI) with the aid of the first response information (RES1) formed.

9. Method according to one of the previous claims, **characterised in that** the identification number (EI) is stored in the form of a first bit sequence in a register (15), that the memory unit (5) is initially filled by the second bit sequence forming the information pattern (RANDE), that the request information (RANDV) is formed by a third bit sequence, that the contents of the memory unit (5) is mapped in a number of processing steps in blocks in each case by a non-linear mapping means (20) to the first response information (RES1), that with each processing step a bit of the first response information (RES1) is produced, that after a number of processing steps in each case an overwriting of a memory location (30) of the memory unit (5) by a bit as a function of the first encrypted information (V1) is undertaken, with the first encrypted information (V1) being formed bit-by-bit in the timing of the processing steps and the processing steps being clocked by the received request information (RANDV), so that in the operating mode for identification of the device (1) a successive occupation of the memory unit (5) is produced as a function of the encrypted information (V1).

10. Electronic device (1) with a register (15) for storing an identification number (EI) and first non-linear mapping means (20) for creating first response information (RES1) as a function of the identification number (EI) on receipt of request information (RANDV), **characterised in that**
a memory unit (5) is provided, the content of which is supplied to the first non-linear mapping means (20) for a first non-linear mapping to the first response information (RES1), with the memory unit (5) being initially occupied by an information pattern (RANDE),
a first function element (F1) is provided that creates first encrypted information (V1) from the identification number (EI) as a function of the request information (RANDV) and the formed first response information (RES1), and
means are provided that successively occupy the memory unit (5) in an operating mode for identification of the device (1) as a function of the created first encrypted information (V1).

11. Device (1) according to claim 10, **characterised in that** the first function element (F1) is embodied for carrying out a linear or non-linear logical linkage of the identification number (EI) with the request information (RANDV) and the first response information (RES1), in order to form the first encrypted information (V1).

12. Device (1) according to claim 10 or 11, **characterised in that** the means are designed for successive occupation of the memory unit (5) directly with the encrypted information (V1).

13. Device (1) as claimed in claim 10 or 11, **characterised in that,**
second non-linear mapping means (25) are provided which map the content of the memory unit (5) by means of a second non-linear mapping to the second response information (RES2),
a second function element (F2) is provided that logically links the first response information (RES2) to the first encrypted information (V1) in order to form second encrypted information (V2), and means are provided that carry out a successive occupation of the memory unit (5) directly with the second encrypted information (V2).

14. Device (1) according to claim 13, **characterised in that** the second function element (F2) carries out a linear or non-linear logical linkage of the second response information (RES2) with the first encrypted information (V1) in order to form the second encrypted information (V2).

15. Device (1) according to one of claims 10 to 14, **characterised in that** means are provided which output the information pattern (RANDE) and at least a part of the first response information (RES1) to a station (10) checking the identity of the electronic device (1).

16. Device according to one of claims 10 to 15 that is designed as a mobile radio device.

## Revendications

1. Procédé de cryptage d'une information d'identification (EI) d'un appareil électronique (1), l'information d'identification (EI) étant stockée dans l'appareil électronique (1) et appliquée non linéairement sur une première information de réponse (RES1) à la réception d'une information d'interrogation (RANDV), **caractérisé en ce que**
le contenu d'une unité de mémoire (5) est converti par une première application non linéaire dans la première information de réponse (RES1), l'unité de mémoire (5) étant occupée initialement par un modèle d'information (RANDE),
une première information cryptée (V1) est générée à partir de l'information d'identification (EI) en fonction de l'information d'interrogation (RANDV) et de la première information de réponse (RES1) formée et
l'unité de mémoire (5) est occupée successivement en fonction de la première information cryptée générée (V1) dans un mode de fonctionnement servant à l'identification de l'appareil (1).

2. Procédé selon la revendication 1, **caractérisé en ce que** la première information cryptée (V1) est formée par association linéaire ou non linéaire de l'information d'identification (EI) à l'information d'interrogation (RANDV) et la première information de réponse (RES).

3. Procédé selon la revendication 1 ou 2, **caractérisé en ce que** l'unité de mémoire (5) est occupée successivement directement par la première information cryptée (V1).

4. Procédé selon la revendication 1 ou 2, **caractérisé en ce que** le contenu de l'unité de mémoire (5) est appliqué par une deuxième application non linéaire sur une deuxième information de réponse (RES2) et **en ce que** la deuxième information de réponse (RES2) est associée à la première information cryptée (V1) pour former une deuxième information cryptée (V2) par laquelle l'unité de mémoire (5) est occupée successivement.

5. Procédé selon la revendication 4, **caractérisé en ce que** la deuxième information de réponse (RES2) est associée linéairement ou non linéairement à la première information cryptée (V1) pour former la deuxième information cryptée (V2).

6. Procédé selon l'une des revendications précédentes, **caractérisé en ce qu'**au moins une partie de la première information de réponse (RES1) et le modèle d'information (RANDE) sont délivrés à une station (10) qui contrôle l'identité de l'appareil électronique (1).

7. Procédé selon la revendication 6, **caractérisé en ce que** le contenu de l'unité de mémoire (5) à la base de la génération de la partie de la première information de réponse (RES1) à délivrer à la station de contrôle (10) est formé entièrement en fonction de la première information cryptée (V1).

8. Procédé selon l'une des revendications précédentes, **caractérisé en ce que** l'unité de mémoire (5) est occupée successivement soit en fonction de la première information générée (V1) pour l'identification de l'appareil électronique (1) soit en fonction d'une information de clé de système (SSI) pour le cryptage d'une suite de données (D), la suite de données (D) étant cryptée, lors de l'occupation de l'unité de mémoire (5), à l'aide de la première information de réponse formée (RES1).

9. Procédé selon l'une des revendications précédentes, **caractérisé en ce que** l'information d'identification (EI) est stockée sous la forme d'une première suite binaire dans un registre (15), **en ce que** l'unité de mémoire (5) est remplie initialement entièrement par une deuxième suite binaire formant le modèle d'information (RANDE), **en ce que** l'information d'interrogation (RANDV) est formée par une troisième suite binaire, **en ce que** le contenu de l'unité de mémoire (5) est appliqué de manière telle sur la première information de réponse (RES1), en plusieurs étapes de traitement et respectivement bloc par bloc par des premiers moyens d'application non linéaires (20), que, à chaque étape de traitement, il se forme un bit de la première information de réponse (RES1), **en ce que**, après plusieurs étapes de traitement, respectivement un emplacement de mémoire (30) de l'unité de mémoire (5) est écrasé par un bit en fonction de la première information cryptée (V1), la première information cryptée (V1) étant formée bit par bit au rythme des étapes de traitement et les étapes de traitement étant cadencées par l'information d'interrogation reçue (RANDV) de sorte que, dans le mode de fonctionnement servant à l'identification de l'appareil (1), on obtient une occupation successive de l'unité de mémoire (5) en fonction de la première information cryptée (V1).

10. Appareil électronique (1) avec un registre (15) pour le stockage d'une information d'identification (EI) et des premiers moyens d'application non linéaires (20) pour générer une première information de réponse (RES1) en fonction de l'information d'identification (EI) à la réception d'une information d'interrogation (RANDV),
**caractérisé en ce que**
une unité de mémoire (5) est prévue, dont le contenu est envoyé sur les premiers moyens d'application non linéaires (20) pour une première application non linéaire sur la première information de réponse (RES1), l'unité de mémoire (5) étant occupée initialement par un modèle d'information (RANDE),
un premier élément fonctionnel (F1) est prévu, lequel génère une première information cryptée (V1) à partir de l'information d'identification (EI) en fonction de l'information d'interrogation (RANDV) et de la première information de réponse formée (RES1) et
des moyens sont prévus, lesquels exécutent, en fonction de la première information cryptée générée (V1), une occupation successive de l'unité de mémoire (5) dans un mode de fonctionnement servant à l'identification de l'appareil (1).

11. Appareil (1) selon la revendication 10, **caractérisé en ce que** le premier élément fonctionnel (F1) est réalisé pour exécuter une association linéaire ou non linéaire de l'information d'identification (EI) avec l'information d'interrogation (RANDV) et la première information de réponse (RES1) pour former la première information cryptée (V1).

12. Appareil (1) selon la revendication 10 ou 11,
**caractérisé en ce que** les moyens sont réalisés pour une occupation successive de l'unité de mémoire (5) directement avec la première information cryptée (V1).

13. Appareil (1) selon la revendication 10 ou 11,
**caractérisé en ce que**
des deuxièmes moyens d'application non linéaires (25) sont prévus, lesquels appliquent le contenu de l'unité de mémoire (5) sur une deuxième information de réponse (RES2) au moyen d'une deuxième application non linéaire,
un deuxième élément fonctionnel (F2) est prévu, lequel associe la deuxième information de réponse (RES2) à la première information cryptée (V1) pour former une deuxième information cryptée (V2) et
des moyens sont prévus, lesquels exécutent une occupation successive de l'unité de mémoire (5) directement avec la deuxième information cryptée (V2).

14. Appareil (1) selon la revendication 13, **caractérisé en ce que** le deuxième élément fonctionnel (F2) exécute une association linéaire ou non linéaire de la deuxième information de réponse (RES2) avec la première information cryptée (V1) pour former la deuxième information cryptée (V2).

15. Appareil (1) selon l'une des revendications 10 à 14, **caractérisé en ce que** sont prévus des moyens qui exécutent une délivrance du modèle d'information (RANDE) et au moins d'une partie de la première information de réponse (RES1) à une station (10) qui contrôle l'identité de l'appareil électronique (1).

16. Appareil selon l'une des revendications 10 à 15, lequel se présente sous la forme d'un appareil radio mobile.
